# EUROPEAN PATENT APPLICATION

(11) **EP 4 131 892 A1**
(43) Date of publication of application: **08.02.2023**
(21) Application number: 21189445.6
(22) Date of filing: 03.08.2021
(51) Int. Cl.: H04L 65/00

(54) **A COMMUNICATION SYSTEM FOR ENABLING MULTIMEDIA STREAMING BETWEEN DEVICES**

(71) Applicant: Quintetto S.r.l., 11020 Nus (IT)
(72) Inventor: Iamonte, Giovanni, 10010 Carema, Torino (IT)
(74) Representative: Crugnola, Pietro

(57) **Abstract**

A communication system enabling a two-way peer-to-peer communication of real-time multimedia streaming, the communication system comprising a streaming software capable of receiving multimedia audio-video contents from a variety of producer devices and streaming them to consumer multiple devices for playback and fruition; said streaming software comprising an adaptive bandwidth controller to adapt the resolution of audio and video streaming to an available bandwidth for the audio and video streaming, wherein the adaptive bandwidth controller measures at pre-established time intervals a number of packets of an uploaded video stream that are lost at the output of the video stream and adapts a bandwidth usable for the video stream to the results of the measurements of the lost packets increasing the usable bandwidth if the percentage of lost packets decreases or remain lower than a pre-established percentage and decreasing the usable bandwidth if the percentage of lost packets increases.

## Description

The present invention concerns a two-way peer-to-peer communication system that allows communication of real-time multimedia streaming such as audio/video/data streams across multiple systems, such as smartphones, tablets, PCs, and MACs.

In recent years video streaming technology, products, and services, in particular have grown dramatically becoming the forefront of a new internet revolution, aimed at connecting more and more people and businesses efficiently, securely and inexpensively.

Real-time multimedia streaming means streaming of multimedia content that is sent while it is being produced.

Two main operating modes of communication systems for multimedia streaming are known.

A first operating mode is called real-time mode, which is a real-time peer-to-peer two-way streaming between multiple users, through the devices they control.

The connection takes place between users who do not know their respective IP addresses and therefore the connection is supported by signalling and connection establishing mechanisms.

This operating mode is the preferred solution for a 2-way communication where low latency is an essential requirement. Resolution may need to be adapted to the transfer speed.

A second operating mode is called live mode, which is a one-way streaming between a content producer and multiple end-users, through a server that end-users can access. The server IP address is known to end-users somehow.

This second operating mode allows very good resolution, generally at the expense of latency.

An important requirement for any communication system is data security, which refers to the protection of data from unauthorized access, use, change, and disclosure. Both individuals and businesses have an absolute need of protective measures for securing data from unapproved access throughout the data lifecycle.

Most streaming applications (such as the ones made available for instance by Facebook, Google, Microsoft, Apple) are available as cloud services with lots of users and lots of weaknesses. Such streaming applications run over several seconds delays in response making direct interaction between users/machines substantially impossible; they are very rudimentary when it comes to connecting to devices that capture event-driven events, and what is more they cannot handle process-driven real-time events; they do not guarantee an acceptable level of security of communications and expose businesses to serious risks of data breach of sensitive information, or even loss, damage or destruction of corporate assets: a system, located between content source and destination, that acts as an intermediary for corporate streams is able, by design, to save, analyse, and process them, as well as to make them available, somehow, to malicious people.

A scope of the present invention is to provide a communication system which enables a two-way peer-to-peer communication of real-time multimedia streaming such as audio/video/data streams across multiple systems with low latency, very good resolution and high-level data security.

The scope of the invention is reached with a communication system according to claim 1.

The communication system according to the invention makes possible to improve and enrich the exchange of audio-video-data between people, allows interaction between people and process events produced throughout a business enterprise, or generated in a monitored environment, allows interaction between process events.

In particular the communication system according to the invention makes possible a two-way near-zero latency one-to-one communication; an one-way near-zero latency one-to-many communication + "feedback from users" transfer; a combination of data from multiple sources and streaming to destination to be disassembled, listened to/seen, processed, prepared to eventually become part of a process; an ultra-safe operation which makes important data of the users of system, such as sensible, private and secret data, physically inaccessible.

Further features and advantages of the present invention will be evident from the following description of some exemplary embodiments of the invention, with reference to the attached drawings, in which:
Figure 1 is a logic diagram of a basic configuration of a communication system according to the invention;
Figure 2 is a block diagrams illustrating the streaming software of the communication system according to the invention;
Figure 3 is a block diagram illustrating the structure of a first component of the communication system according to the invention, allowing direct raw audio/video transfer between users of the communication system;
Figure 4 is a block diagram of a second component of the communication system according to the invention that combines raw audio/video data from user devices (embedded or externally connected) and make them available to the first component through a Virtual Device;
Figure 5 is a block diagram of a third component of the communication system according to the invention that allows a user to manage the transfer of such data as files, messages, status indications, events, etc.;
Figure 6 is a block diagram of an application of the communication system according to the invention which is to be installed on a specific user device to allow communication management with its own devices and with the streaming software of the communication system;
Figure 7 is a diagram illustrating an example of exchange between users of digital data retrieved from physical devices, or extracted from non-physical devices such as internal or external multimedia files and A/V streams;
Figure 8 is a diagram illustrating an example of a minimal-latency communication between two users who, in addition to normal conversation, need to stream A/V data with no latency;
Figure 9 is a diagram illustrating an example of minimal-latency communication between several users and the operators of a Control Centre (a broadcasting studio, a security control room, an enterprise contact room for the employees, ...);
Figure 10 is a diagram illustrating an example of a live streaming to users of the communication system according to the invention.
Figure 11 is an example of live streaming to social network from users of the communication system according to the invention.

The communication system according to the invention provides efficient multimedia steaming between devices, in particular streaming of multimedia content that is sent while it is being produced.

There exist two main operating mode of a communication system for streaming of multimedia content.

A first operating mode is the so-called real time operating mode which is characterized by a real-time peer-to-peer two-way streaming between multiple users, through the devices they control.

The connection takes place between users who do not know their respective IP addresses and therefore the connection is supported by signalling and connection establishing mechanisms.

This first operating mode is the preferred solution for a 2-way communication where low latency is a must. Resolution may need to be adapted to the transfer speed.

A second operating mode is the so-called live operating mode which is characterized by a one-way streaming between a content producer and multiple end-users, through a server that end-users can access. The server IP address is known to end-users somehow.

This second operating mode allows very good resolution of the content transmitted to the end-users, generally at the expense of latency.

The communication system according to the invention makes possible to greatly reduce latency as will be explained below.

In addition, the communication system according to the invention provides a high degree of data security to protect data from unauthorized access, use, change, and disclosure.

Both individuals and businesses using the communication system according to the invention have an absolute need of protective measures of securing data from unapproved access throughout the data lifecycle.

As will be explained below, the end-to-end communications within the communication system according to the invention are encrypted and absolutely inaccessible. If the system implementation is deployed on-premises, there is no possibility that private information can be accessed from the outside.

For ease of understanding, in the following the terms producer and consumer (of multimedia content to stream) will be used to indicate the origin and destination of streaming flows. Clearly, in a two-way communication producer and consumer change roles several times during streaming sessions.

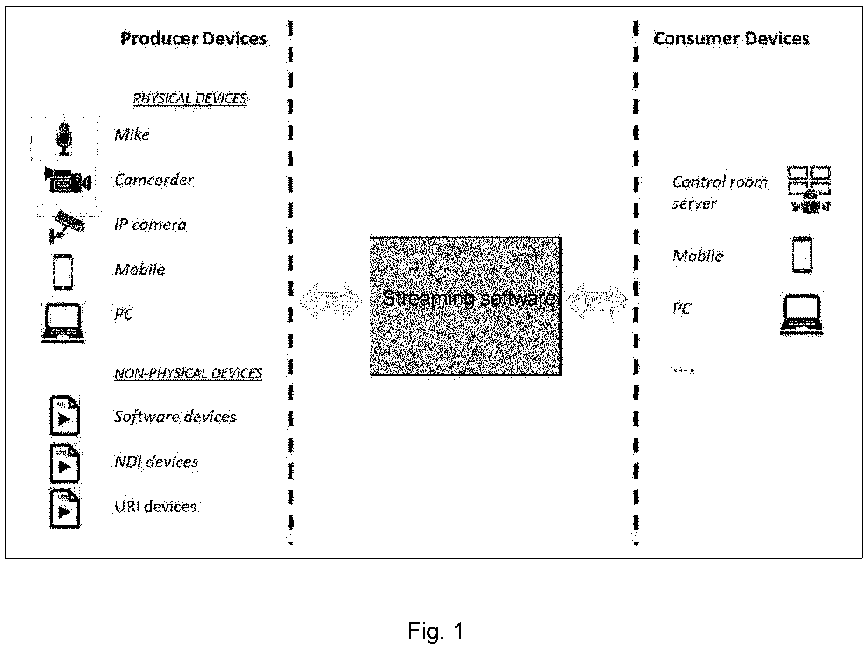

A basic configuration of the communication system according to the invention is illustrated in the logic diagram of Figure 1.

The communication system according to the invention uses a streaming software which is a robust, customizable, and scalable communication software that powers reliable streaming of high-quality video and audio to any device, anywhere. It receives multimedia audio-video contents from a variety of producer devices and streams them to consumer multiple devices for playback and fruition, efficiently and securely.

The streaming software consists of a set of cooperating servers installed in the network at the consumer's premises, or available as a cloud resource (cloud-hosted) plus client components to be integrated in the client devices. The composition of the streaming software (servers, clients, functions, interfaces) will be detailed below.

The communication process takes place according to the following scheme:
1. the streaming software accepts audio and video data coming from physical devices, such as cameras, microphones (mikes), mobiles, etc. and non-physical devices, such as the ones described below: software devices, NDI devices, URI devices.

### - Software devices

These devices are typically used to perform tests or as backgrounds to be combined with raw data from other devices. Some examples are: plain text, colour bars, black boxes, null devices, 350 and 800 Hz tones.

### - NDI devices

These devices consist of audio and video data typically streamed from cameras and microphones, compliant with the NDI protocol. The raw data from these devices are sent over the network in broadcast mode and can be identified by name. An NDI device can be opened with its name even if it is not yet present on the network, the raw data feed starting when the device is online.

### - URI devices

These devices can be reached on the internet through a URI identifier, e.g. mp4 files and video streams (RTSP, UDP, SRT, HLS, ...). To obtain the raw data, the software opens the device, identifies the streams which compose it, recognizes the encoding type of each stream and proceeds to the decoding. Raw data are then placed in separate queues where they can be extracted, as if they came from local physical sources.

An URI device can be opened with its URI identifier even if it is not yet present on the network, the raw data feed starting when the device is online.
2. The software assembles the data received from the providers' devices into packets that are transferred continuously to consumer's devices in different transmission modes that can be configured based on such parameters as security level, transfer speed, latency, and data quality, as will be explained below.

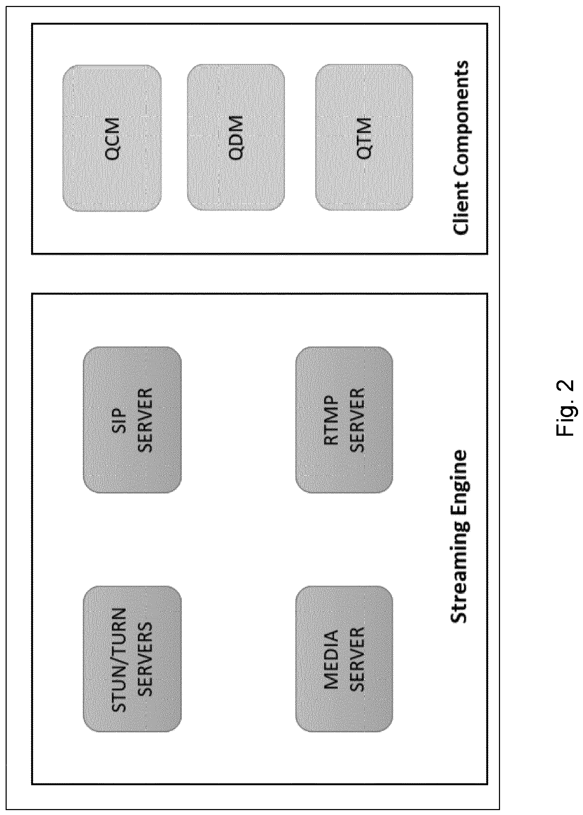

The architectural components of Streaming Software are shown in Figure 2.

The streaming software comprises a streaming engine and client components.

### STREAMING ENGINE

The Streaming Engine comprises 4 components:

### - STUN/TURN (Session Traversal Utilities for NAT/Traversal Using Relay around NAT) SERVERS:

STUN/TURN servers are used by a client to traverse NATs when establishing peer-to-peer communication sessions with another client. The term "client" designates any person or device which connects to and uses the communication system according to the invention.

A device uses the STUN server to discover its public IP address when it is located behind a NAT/Firewall. When this device wants to receive an incoming connection from another party, it provides this public IP address as a location where it can receive a connection.

If the NAT/Firewall will not allow the two devices to connect directly (as in the case of symmetric NAT), they make a connection to the TURN server, which will relay media streams between the two parties.

### - SIP (Session Initiating Protocol) SERVER:

This server is used for initiating, maintaining, and terminating real-time sessions that include voice, video and messaging applications.

Main functions of the SIP server are:
- Set up a session between two (or more) endpoints.
- Negotiate session media parameters and specifications for each endpoint using the SDP protocol.
- Adjust the media parameters and specifications of a session during the session (putting a call on hold, for example).
- Substitute one endpoint with a new endpoint (call transfer).
- Terminate a session

The SIP server does not actually transmit or receive any media - this is done by the TURN Server.

### - MEDIA SERVER

The MEDIA server is used to store digital media content and control user access over the web.

Main functions of the MEDIA server are:
- Managing domains, groups, and users.
- Creating immediate, or delayed sessions (e.g. a meeting, a training lesson, ..) and invites people to join them. All the events of the session are recorded;
- Providing or revoking access to users coming from the external directory servers.
- Managing content: naming, tagging, indexing, correlating, archive.
- Managing users, roles, and profiles.
- Collecting metadata from devices and users.
- Exposing a REST API to allow QCM and other systems to retrieve or manipulate information easily.
- Using Artificial Intelligence to automate processes.

### RTMP (Real Time Messaging Protocol) SERVER

This server It is used to stream digital content received from a client according to a communication protocol designed to minimize latency.

The process begins with a handshake between the client wishing to stream media and the server delivering that video or audio content.

Once the client and server are connected, they can begin exchanging information and the streaming process starts: the player on the client's device accesses the A/V stream from the server.

### CLIENT COMPONENTS

The client components QCM, QDM, and QTM are multiple-platform software modules adaptable to specific reference software environments (IOS, Android, Windows, MAC, Linux.)

### QCM (Core Manager)

QCM is a component that allows direct raw audio/video transfer between clients.

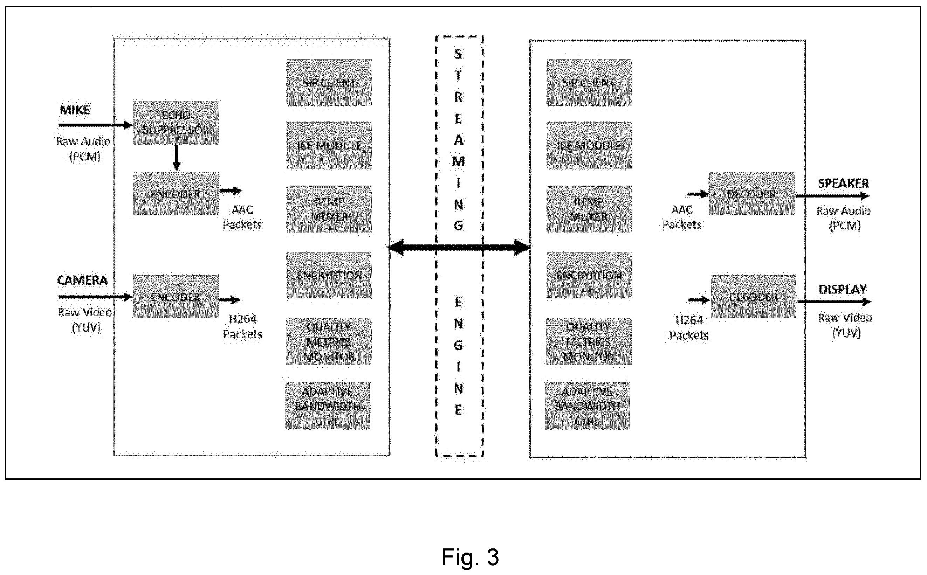

QCM consists of the components shown in Fig. 3.

QCM comprises the following components:

### - SIP CLIENT

This is a client application that acts as a messaging interface with the Engine SIP Server.

It is used to activate the communication between clients whose public IP addresses are not known a-priori by both clients.

Using the SIP terminology, the handshake between a caller SIP client, designed for instance as John, the SIP server, and the called SIP client, designed for instance as Lisa, takes place according to the following scheme (SIP terminology is used).

It is assumed that both users are logged into the communication system domain.

1. John invites Lisa.

The system retrieves John's Candidates: host (Local IP, port), sreflex (external IP, port), relais (Turn IP, port), e.g. (192.168.100.60, 4200), (46.28.29.152, 40306),

### (194.116.76.98, 62000)

John's Candidates are encrypted and sent to Lisa.

### 2. Lisa accepts the invitation.

The system retrieves Lisa's Candidates: host (Local IP, port), sreflex (external IP, port), relais (Turn IP, port), e.g. (192.168.10.120, 3000), (216.58.205.100, 3000), (194.116.76.98, 62001).

Lisa's Candidates are encrypted and sent to John.

Negotiation process is started:
- multiple Candidate combinations are checked in a recursive way on both sides;
- the system selects the best channel on John's side and sends the chosen Candidate to Lisa;
- the system selects the best channel on Lisa's side and sends the chosen Candidate to John.

### - ICE MODULE

The ICE (Interactive Communication Establishment) module establishes checks between caller client and called client, as described above, and the subsequent flow of audio/video data between them are handled by the clients directly, according to the ICE protocol, a communication protocol supported by the STUN/TURN server for negotiating traversing NATs when establishing peer-to-peer communication sessions. Once the peer-to-peer communication session is established, A/V data stream through the TURN server.

### - RTMPS MUXER

The RTMPS (Real Time Messaging Protocol Secure) muxer (also called multiplexer) encodes the input raw A/V data, muxes them and sends the stream to the RTMP server.

### - ENCRYPTION

This component provides data encryption, message authentication and integrity. All communications described above are encrypted according to the TLS (Transport Layer Security) and SRTP (Secure Real-time Transport) protocols.

### -QUALITY METRICS MONITOR

This component monitors the quality of each connection and saves the statistical results for analysis and reference.

Measured data refer to such connection parameters such as:
- throughput (max, min, avg)
- bandwidth speed (avg)
- packet loss
- jitter
- etc.

### - ADAPTIVE BANDWIDTH CONTROLLER

The adaptive bandwidth controller works based on an algorithm that in real-time selects and activates the best resolution compatibly with the available bandwidth.

The adaptive bandwidth controller makes possible to the communication system according to the invention to support multimedia streaming applications with different quality-of-service (QoS) requirements.

To prevent inefficient bandwidth allocation that may lead to under-utilization of network resources, the communication system according to the invention creates different renditions of an exchanged audio/video stream by providing a variety of resolution and bitrate options.

It is known that, in conditions of insufficient upload bandwidth and of significant fluctuations of the flow rate of the same, a loss of audio and video packets occurs which affects the intelligibility of the stream up to its complete interruption.

Usually, in the event of a significant loss of bandwidth, in addition to the progressive reduction of the transmission quality, the lost packets create "artifacts", or missing areas of the video stream. A scope of the adaptative bandwidth controller is to completely eliminate the presence of artifacts.

The algorithm on which the adaptative bandwidth controller works acts on the bandwidth required by the stream to be transmitted, automatically varying the quality level within specific parameters, in order to completely avoid packet losses.

A threshold within which the quality of a transmission is still considered acceptable and admissible is 30% of the theoretically required maximum.

The algorithm does not act on the adaptability of the audio quality, because the significant difference in bandwidth required by the two audio and video streams causes that the reduction in video quality, as a derivative effect, makes a quantity of bandwidth available to the audio stream always sufficient to maintain high quality levels of the audio stream.

If the reduction of the video quality to 30% is not sufficient to prevent the loss of upload packets, the video stream is cancelled, to guarantee the continuity of the transmission in audio only, at the highest possible quality.

Initially, the algorithm works to obtain the best audio and video upload quality within the shortest possible reaction time. This is to prevent the user from closing the call for bad communication. In the presence of packet loss at the start of the transmission, the algorithm reduces the video quality drastically even more than necessary, in order to immediately ensure the absence of video "artifacts" and good audio quality. Subsequently, the system self-adjusts to find a higher equilibrium point, raising the video quality to the optimal level for the available band conditions.

The transmission of a video requires as much bandwidth as the transmitted images change rapidly. According to the chosen h264 configuration (resolution, fps, etc.), there are different values regarding:
- the maximum bandwidth required, i.e. the bandwidth required to obtain a desired quality of the video stream;
- the maximum usable bandwidth, i.e. the maximum bandwidth which may be used to avoid los of video packets;
- the minimum acceptable bandwidth (30% of maximum bandwidth required), i.e. the minimum bandwidth which allows an acceptable quality of the video stream to be obtained.

When the video transmission starts, the maximum bandwidth required is used for the chosen h264 configuration.

Then a maximum usable band is set and the system adapts to ensure that this threshold is not exceeded.

This means that the quality of the video transmission may be degraded. This degradation will be more noticeable with strongly moving images, while it will be barely noticeable with static images. As an example, a video stream representing a television speaker normally requires a medium / low band.

At pre-established time intervals, for instance every 5 seconds, the system measures the number of video packets lost at the output, if any. Video packets are data packets constituting the video stream.

If the percentage of lost packets is ≥ 85% and this condition occurs 2 times in a row, the "Maximum usable band" is considered to correspond to the "Minimum acceptable band".

If the percentage of lost packets is ≤ 2% the loss of packets is ignored, which means that the maximum usable bandwidth is set equal to the maximum bandwidth required for a desired quality of the video streaming.

If the percentage of lost packets is > 2% and the bandwidth has not yet been reduced, the "Maximum usable bandwidth" is set to 40% of the "Maximum bandwidth required".

If the percentage of lost packets is > 2% and the bandwidth has already been reduced, the Maximum usable bandwidth" is considered to correspond to the "Minimum acceptable bandwidth".

When the percentage of lost packets is > 2%, if the "Necessary average bandwidth" is less than the "Minimum acceptable bandwidth" and this condition occurs four times, the output video is blocked.

If the percentage of lost packets is > 2% and the "Maximum Usable Bandwidth" is equal to the "Minimum Acceptable Bandwidth", the output video is blocked if a packet loss of more than 2% occurs 3 times or the packet loss is greater than 60%.

If there are no packets lost for two consecutive measurements and the required bandwidth is close to the "Maximum Usable Bandwidth", the "Maximum usable bandwidth" is increased by 20% up to 90% of the minimum bandwidth with which the packet loss occurred.

If packet loss occurs regardless of the bandwidth used, the network is marked as a "packet loss network".

In the event of a network change, such as, for example, when switching from a telephone network to a Wi-Fi network, the algorithm restarts the measurement and procedural process as at the start of the transmission.

### QDM (DEVICE MANAGER)

This is a component that combines raw audio/video data from the client devices (embedded or externally connected) and make them available to QCM through a Virtual Device.

Conceptually, a virtual device is a device that combine raw data from different sources, e.g. data captured by physical devices, and software, NDI and URI devices. All devices are captured and arranged through a Filter Graph mechanism that takes the input, process (or change) it, and then outputs the processed data to a specific virtual device. Virtual devices behave like physical devices, and as such they are accessed.

The communication system according to the invention is capable of defining and managing:
- four virtual audio input devices;
- four virtual video input devices;
- four virtual audio output devices;
- four virtual video output devices

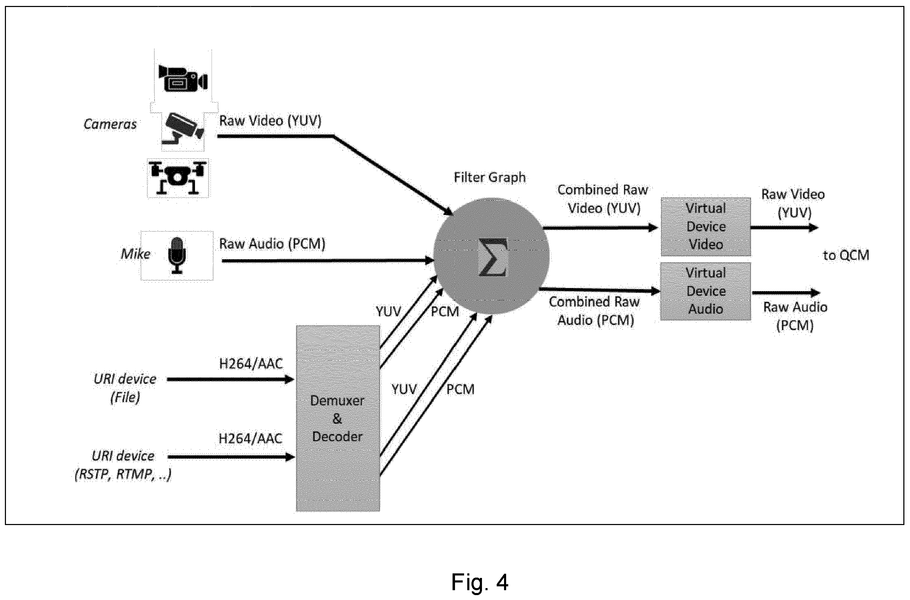

The device Manager implements an innovative operational scheme depicted in Figure 4.

Raw A/V data are combined by using a filter graph to obtain raw video and raw audio data that have virtual devices as outputs.

The following scheme applies:
1. URI devices are demuxed and decoded to create raw video and raw audio.
2. These virtual devices are input to QCM (Core Manager).

### QTM (Transfer Module)

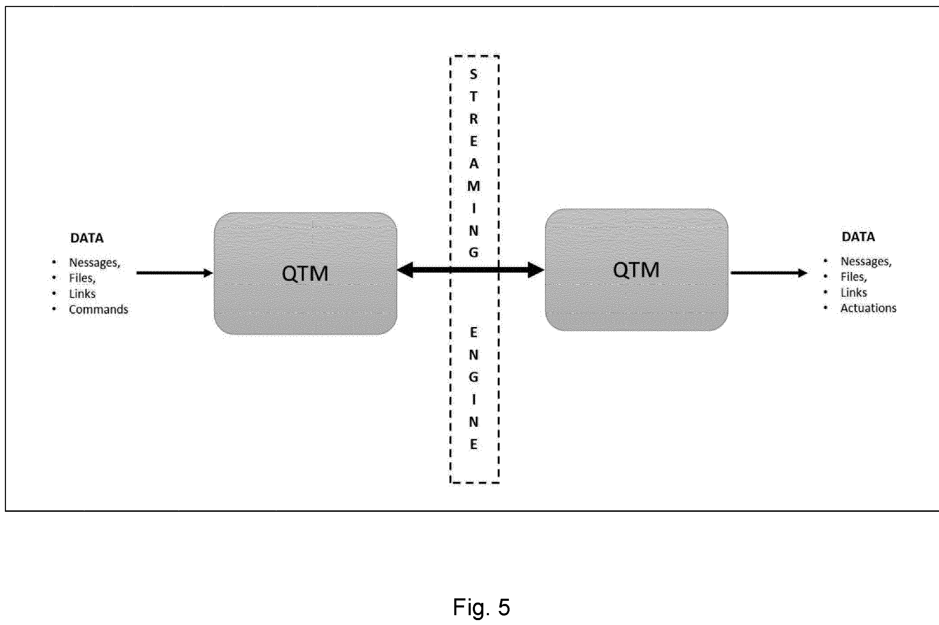

This is a component that allows users to manage the transfer of such data as files, messages, status indications, events, etc., as illustrated in Figure 5.

The main operating modes of QTM are:

### Peer-to-peer data exchange

This mode is used when volatile data are sent for peer-to-peer data exchange between two QCMs (Core Managers), e.g. to implement a chat, or to communicate events or specific application states.

### Content upload, via REST API to the server

This mode is used when a file exchanged between two QCMs (Coe Managers) need to be persistent in the system. In this case, the file is uploaded to the server and once the upload has finished, you can send the message with a link to the file. This method is required in those situations where for some reason a user who send a content do not want the content to be stored on the device of the user who receives the content.

### Command Transfer to Actuators

This mode is used when an event, at the transmitter-end, triggers the sending of a command to one or more actuators, at the receiver-end, that cause a machine or device to operate, e.g. the switch of a camera, a specific action of a robot, etc.

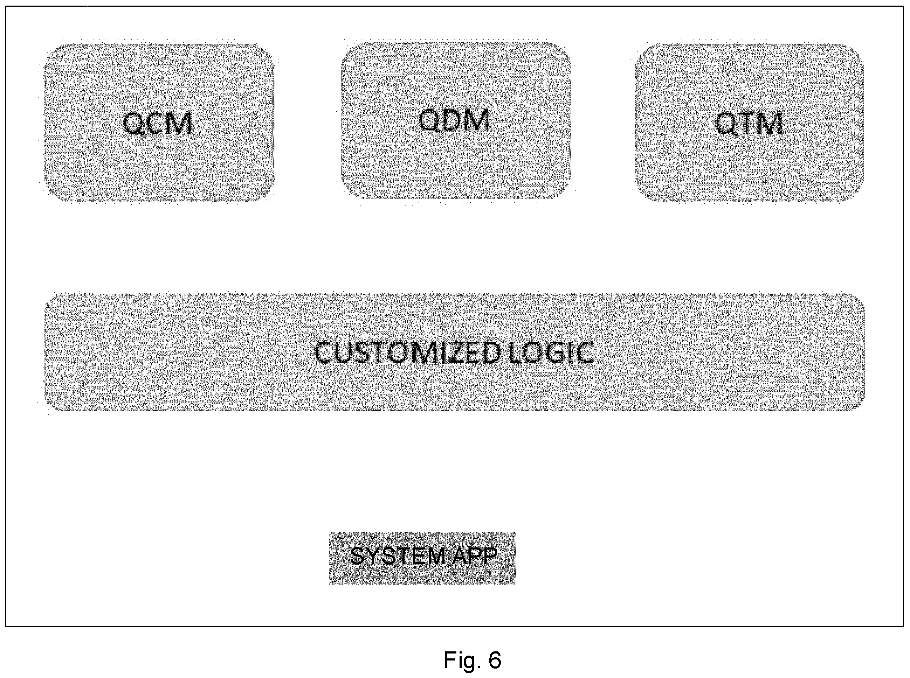

The three above-mentioned client components QCM, QDM and QTM plus a customized logic constitute an application software of the communication system according to the invention (see Figure 6) which is to be installed on a specific user device to allow communication management with user's devices and the Streaming Software of the communication system according to the invention.

The customized logic is a logic needed to adapt the application software for a specific operating system (IOS, Android, MAC, Windows, Linux).

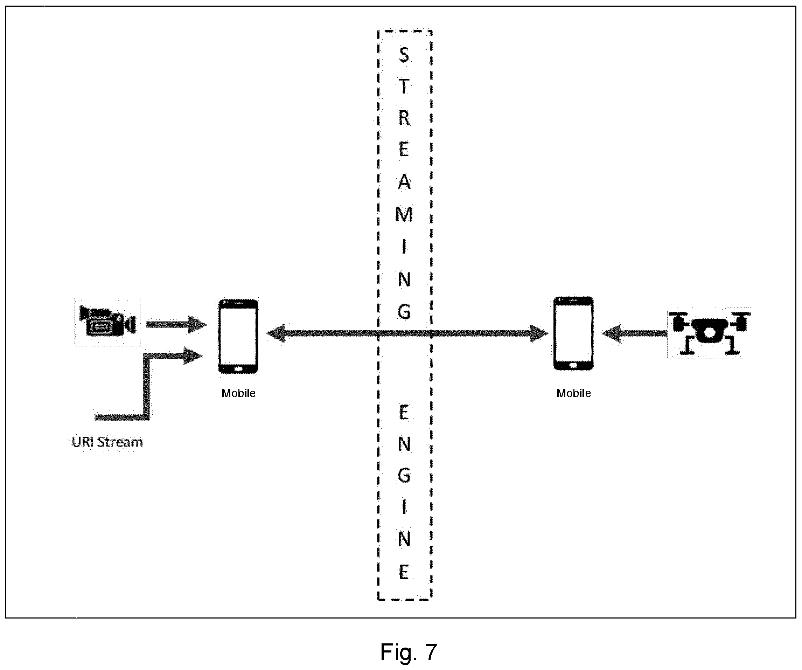

The streaming software uses the client component QDM to provide inter-networking connection capabilities between devices, allowing users to exchange digital data retrieved from physical devices, or extracted from non-physical devices: internal or external multimedia files and A/V streams (see Fig. 7).

### STREAMING STRATEGIES

In the communication system according to the invention A/V (audio/video) streaming can take the form of real-time streaming or live streaming.

With real-time streaming the content plays as it is being captured with negligible delay (e.g. between 400 and 800 msec), the live streaming plays with a certain delay (e.g. from 400 msec up).

As a rule of thumb, real-time streaming is very fast, but quality is influenced by available bandwidth. Live streaming is not so fast, but quality may be higher.

In the following a set of configurations of the communication system according to the invention are presented that show where it is convenient to use real-time streaming or live streaming.

### TWO-WAY REAL-TIME STREAMING

### ONE-TO-ONE

It is a minimal-latency communication between two users who, in addition to normal conversation, need to stream A/V data with no latency.

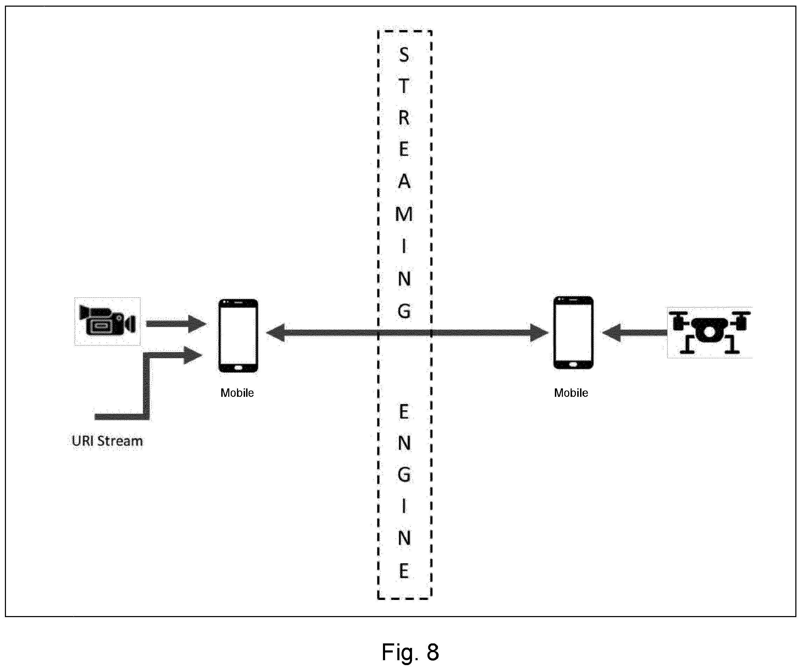

In the example illustrated in Figure 8, a first user of the communication system according to the invention can speak and stream data from mobile internal cameras (at the same time, if the hardware allows it), from an external connected camera, and from a URI device. A second user can speak and stream data from a drone camera.

### TO/FROM CONTROL CENTER

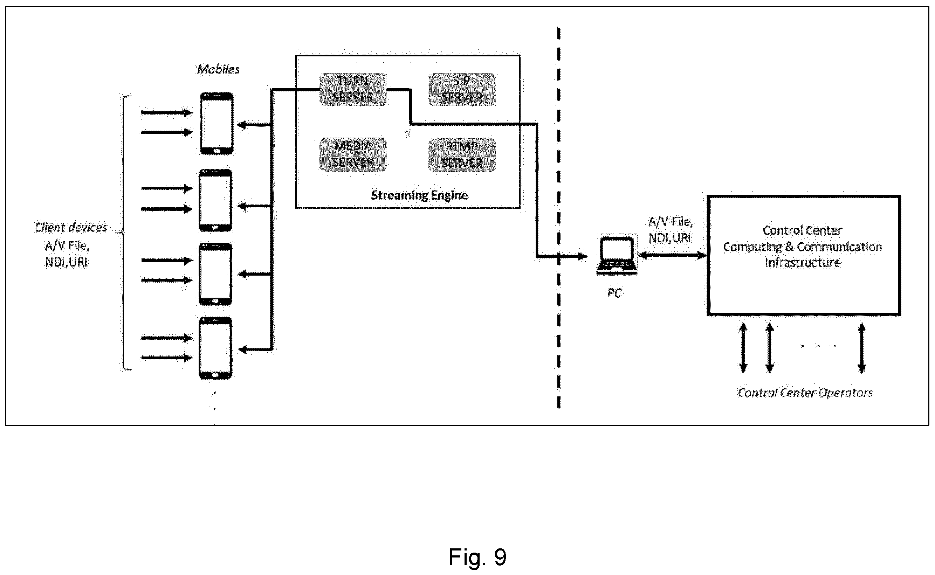

It is a typical minimal-latency communication between several users of the communication system according to the invention and the operators of a Control Centre (a broadcasting studio, a security control room, an enterprise contact room for the employees, etc.). The operators can relay the A/V data to viewers connected in any way to the Control Centre (see Figure 9).

Operators of a control room manage the calls coming from multiple users. A typical operational flow is the following.
1. A Call Centre operator can forward a call from a caller to a target operator, or put the call on hold.
2. The Call Centre operator can resume a held call, and forward it to the target operator, or hung-up.
3. After the call is forwarded, the communication between the caller and the target operator can initiate.
4. The Call Centre operator proceeds to serve next calls.
5. If more incoming calls are on hold, what follows might happen.
   - The Call Centre operator answers the Caller1 and after a brief conversation puts the call on hold.
   - The Call Centre answers the Caller 2 and after a brief conversation forwards the call to the target operator.
   - Once the Caller 2 is on-line with the target operator, the Call Centre operator can resume the call of Caller1.
   - At this point two communications are active: between Caller 2 and the target operator, and between Caller 1 and the Control Centre operator.
6. To forward a call, NDI devices can be used (up to 4 A/V inputs and up to 4 A/V outputs). Use of NDI devices has not hardware limitations, therefore the number of calls that can be forwarded depends exclusively on the software.
7. The Control Room operator can also transfer the A/V stream coming from a caller to one or more output URI device, e.g. a URI file, a URI RTMP, or both.

### LIVE STREAMING TO USERS

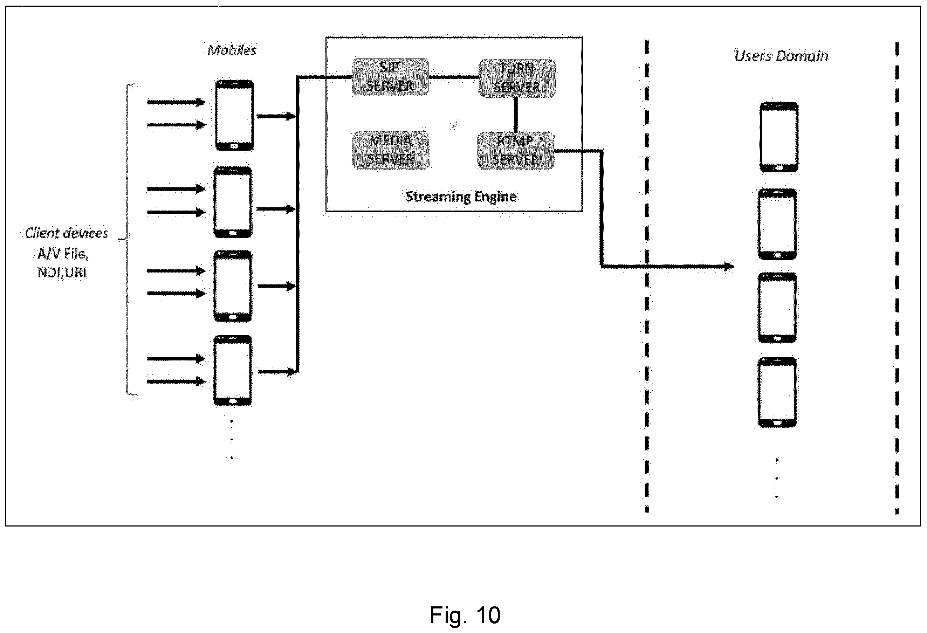

The mechanism of live streaming to users of the communication system according to the invention is shown in Figure 10.

Streaming can originate from a combination of client devices and Filter Graph and initiate according to the following scheme.
1. A source application collects the A/V raw data, muxes them, and sends them to the RTMP server. All the connected users can then play the stream.
2. The stream is always one-way.
3. No connection is established:
   - the source notifies the stream URI to the Media Server;
   - the users' applications retrieve in any way the URI information from the Media Server, connect to the URI and play the stream.
4. When interaction with viewers is not expected, the producer might privilege quality vs latency (e.g. 5 sec) The A/V stream can be generated with high quality parameters (e.g. very high resolution) and the player uses its buffer the time needed to get a fluid stream.
5. When interaction with viewers is expected, the producer might privilege the latency (e.g. 500 msec) vs quality. In this situation viewers can interact in real-time with the producer, for example, through messaging.

In both cases, i.e. when interaction is not expected and when interaction is expected, when the audience is large and globally distributed, the large number of accesses and the distance of the users from the server can cause latency and buffering. To solve this issue, it is possible to employ a CDN (Content Delivery Network). This is a high performance, reliable method to remove bottlenecks that can result when delivering streams with a single server.

### LIVE STREAMING TO SOCIAL NETWORKS

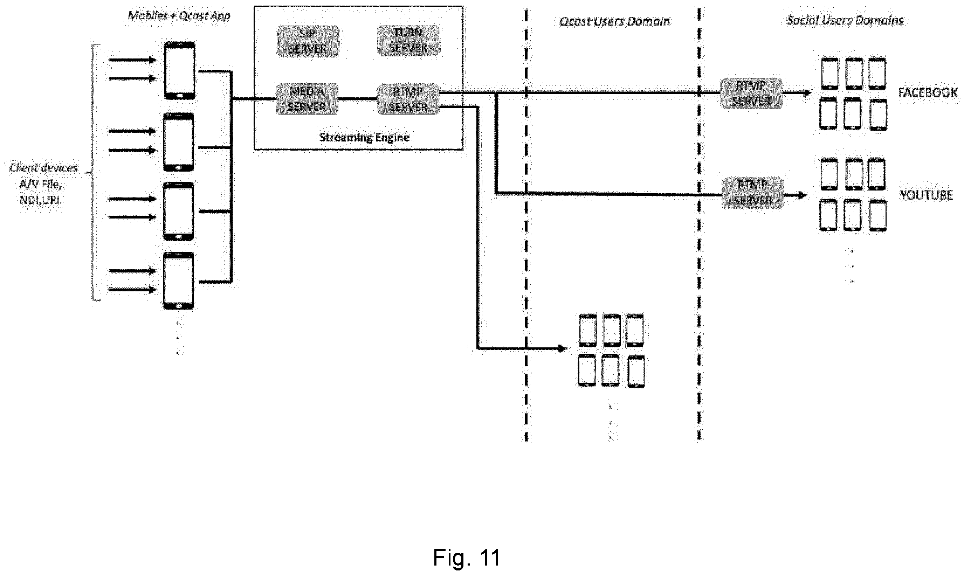

The mechanism of live streaming to Social Networks users is shown in Figure. 11.

Streaming can originate from a combination of client devices and Filter Graph and initiate according to the following scheme.
1. A source application collects the A/V raw data, muxes them, and sends them to the RTMP server of the communication system according to the invention.
2. The application also logs into the social networks of choice (e.g. Facebook, YouTube, ..) sends the tokens retrieved from each social network to the Streaming Engine; after that the RTMP server starts streaming to the social network.
3. Users can play the stream, either connecting to the RMTP server or to the pages/channels of the social network.
4. In the case of connection to the RTMP server, the stream can be received almost instantaneously, in the case of connection to social networks the stream may be delayed for a few tens of seconds.

### COMBINING REAL-TIME AND LIVE STREAMING

By combining real time and live streaming, several solutions can be implemented.

To cite just a few examples:
- call with desktop sharing;
- remote learning (e-school.) ;
- live interview sessions between people and broadcasting of the stream on social networks and TV programs.

## Claims

1. A communication system enabling a two-way peer-to-peer communication of real-time multimedia streaming, the communication system comprising a streaming software capable of receiving multimedia audio-video contents from a variety of producer devices and streaming them to consumer multiple devices for playback and fruition; said streaming software comprising an adaptive bandwidth controller to adapt the resolution of audio and video streaming to an available bandwidth for the audio and video streaming, **characterized in that** the adaptive bandwidth controller measures at pre-established time intervals a number of packets of an uploaded video stream that are lost at the output of the video stream and adapts a bandwidth usable for the video stream to the results of the measurements of the lost packets increasing the usable bandwidth if the percentage of lost packets decreases or remain lower than a pre-established percentage and decreasing the usable bandwidth if the percentage of lost packets increases.

2. The communication system according to claim 1, wherein the usable bandwidth assigned is set to a maximum usable bandwidth for the video stream if a percentage of lost video packets is ≤ 2%.

3. The communication system according to claim 1, wherein a maximum usable bandwidth for the video stream is reduced up to 40% of a maximum bandwidth required for a desired quality of the video stream, if a percentage of lost video packets is > 2%.

4. The communication system according to claim 3, wherein a maximum usable bandwidth for the video stream is set equal to a minimum acceptable bandwidth if the percentage of lost video packets is ≥ 85% and this condition occurs two times in a row.

5. The communication system according to claim 3, wherein the maximum usable bandwidth is set equal to a minimum acceptable bandwidth if the percentage of lost video packets remains > 2% after the maximum usable bandwidth has been reduced.

6. The communication system according to claim 5. wherein the video streaming is blocked if the percentage of lost video packets remains > 2% and a necessary average bandwidth is less than the minimum acceptable bandwidth and this condition occurs four times.

7. The communication system according to one of claims 4 to 6, wherein the video streaming is blocked if the maximum usable bandwidth has been set equal to the minimum acceptable bandwidth and the percentage of lost video packets remains > 2% for three times or the packet loss is greater than 60%.

8. The communication system according to one of claims 3 to 7, wherein the maximum usable bandwidth is increased by 20% up to 90% of a minimum bandwidth with which packet loss occurs, if there are no packets lost for two consecutive measurements and a required bandwidth is close to the maximum usable bandwidth.

9. The communication system according to one of claims 1 to 8, wherein a network used for multimedia streaming is marked as packet loss network if packet loss occurs regardless of the bandwidth used for the multimedia streaming.

10. The communication system according to one of preceding claims, wherein the streaming software comprises a streaming engine, wherein the streaming engine comprises STUN and TURN servers which are configured to allow a client to travers NATS when establishing a per-to-peer communication with another client; a SIP server configured for initiating, maintaining and terminating real time communication sessions that include audio, video and messaging applications; a MEDIA server configured to store digital media content and control access to said digital media content; a RMTP server configured to stream digital content received from a subject according to a communication protocol designed to minimize latency.

11. The communication system according to claim 10, further comprising a Core Manager configured to allow direct audio/video transfer between clients, said Core Manager comprising:
- a SIP client configured to act as a messaging interface with the SIP server to activate communication between clients whose public IP addresses are not known a priori;
- an ICE module configured to establish checks between a caller client and a called client and allow said caller client and called client to directly handle a flow of audio/video data between them according to an ICE protocol;
- a RTMPS MUXER configured to encode raw input audio/video data, muxe them and send the stream to RMTP server and
- an encryption component configured to provide data encryption, data authentication and integrity, wherein data are encrypted according to TLS and SRTP protocols.

12. The communication system according to claim 11, or 12, further comprising a Device Manager configured to combine raw audio/video data coming from client devices and make said data available to said Core Manager through a virtual device, wherein a virtual device is a device that combine raw input data coming from different sources such as physical devices, software, NDI and URI devices, wherein all data from said different sources are captured and arranged trough a filter graph mechanism that process them and output the processed data to a specific virtual device, wherein said physical devices behave like a physical device and are accessed like physical devices.

13. The communication system according to claim 13, wherein the system is capable of defining at least four virtual audio input devices; four virtual video input devices; four virtual audio output devices and four virtual video output devices.

14. The communication system according to one of claims 10 to 14, further comprising a Transfer Module configured to allow users to manage transfer of data in different transfer modes.

15. The communication system according to one of claims 11 to 14, wherein the Core Manager, the Device Manager and the Transfer Module are installed on a user device to allow communication management between user's devices and the streaming software.
